# EUROPEAN PATENT SPECIFICATION

(11) **EP 0 356 591 B1**
(45) Date of publication and mention of the grant of the patent: **15.11.1995**
(21) Application number: 88308166.3
(22) Date of filing: 02.09.1988
(51) Int. Cl.: H01L 41/08

(54) **Ultrasonic driving devices**
Ultraschall-Antriebsvorrichtung
Dispositif d'entraînement ultrasonique

(43) Date of publication of application: 07.03.1990
(73) Proprietor: HONDA ELECTRONIC CO., LTD., Toyohashi-shi Aichi (JP)
(72) Inventor: Honda, Keisuke, Toyohashi-shi Aichi-ken (JP)
(74) Representative: Gordon, Michael Vincent

(56) References cited:
- US-A- 4 752 711
- PATENT ABSTRACTS OF JAPAN, vol. 11, no. 338 (E-553)[2785], 5th November 1987 ; & JP-A-62 118 780
- PATENT ABSTRACTS OF JAPAN, vol. 11, no. 254 (E-533)[2701], 18th August 1987 ; & JP-A-62 64 278
- JOURNAL OF ELECTRONIC ENGINEERING, vol. 24, no. 244, April 1987, pp. 76-80, Tokyo, JP ; Y. AKIYAMA : "Present state of ultrasonic motors in Japan"
- IEEE 1987 ULTRASONICS SYMPOSIUM PROCEEDINGS, Denver, 14th-16th October 1987, vol. 2, pp. 747-756, IEEE ; R. INABA et al.: "Piezoelectric ultrasonic motor"

## Description

The present invention relates to ultrasonic driving devices having structures for decreasing wear.

In a known ultrasonic motor using a piezoelectric vibrator, two groups of electrodes are attached to one end of a ring-type piezoelectric ceramic, the two groups of electrodes being so positioned that standing waves respectively generated by the two groups of electrodes are shifted every π/2 in each position. The parts of the ring-type piezoelectric vibrator corresponding to the electrodes are alternately polarised in reverse. Also, the two groups of electrodes are respectively connected to two oscillators for respectively generating alternating current voltages have π/2 phase shift with respect to each other. When the alternating current voltages from the two oscillators are respectively applied to the two groups of electrodes, two standing waves having π/2 phase shift with respect to each other are generated on the surfaces of the ring-type piezoelectric vibrator. Then, progressive waves resulting from a compound of the two standing waves are generated on the surfaces of the ring-type piezoelectric vibrator. Therefore, when a slider attaching a rotary member is put on the ring-type piezoelectric vibrator, and is strongly pressed to the ring-type piezoelectric vibrator, the rotary member is rotated by the progressive waves.

In that prior ultrasonic motor, however, the slider is easily worn out because the slider of the rotary member is directly pressed on to the piezoelectric vibrator.

US-A-4752711 discloses an ultrasonic driving device, acknowledged in the pre-characterising portion of the present independent claim, in which the rotary member and the piezoelectric vibrator contact each other through a plurality of contact points. Although there is a disclosure that some wear can be reduced, by forming the contact points as balls rotatably attached to the rotary member, the attachment is deliberately such that the rotation of the balls is substantially prevented. Moreover, although there is a general disclosure of the need for the rotary member to be pressed towards the piezoelectric vibrator, there is no disclosure of how that application of pressure can be achieved without additional wear.

It is, therefore, the primary object of the present invention to provide an ultrasonic driving device having a structure for enabling wear to be further reduced.

According to the present invention, an ultrasonic driving device comprises:
a stator including piezoelectric vibrator means, a plurality of balls, discs or rolls held in contact with the stator by a pressure member acted upon by pressure means, and rotary means rotatably attached to the plurality of balls, discs or rolls, whereby driving the piezoelectric vibrator means causes the stator to generate a progressive wave which is transmitted through the plurality of balls, discs or rolls to drive the rotary means;
characterised in that the plurality of balls, discs or rolls extend through the rotary means into contact with the pressure member and roll along the pressure member when the rotary means is driven by the progressive wave.

Preferred features are the subject of the present subsidiary claims.

Several ultrasonic driving devices, according to the present invention, will now be described, by way of example only, with reference to the accompanying drawings, in which:-
Fig. 1 shows a side view of an ultrasonic driving device provided by the present applicant;
Fig. 2 shows a fragmentary side view of an ultrasonic driving device of an embodiment of the present invention;
Fig. 3 shows a plan view of a rotary member of the ultrasonic driving device in Fig. 2;
Fig. 4 shows a view for explaining a principle of the ultrasonic driving device in Fig. 2;
Fig. 5 shows a fragmentary side view of an ultrasonic driving device of a further embodiment of the present invention;
Fig. 6 shows a plan view of a rotary member of the ultrasonic driving device in Fig. 5;
Fig. 7 shows a plan view of an ultrasonic driving device of another embodiment of the present invention;
Fig. 8 shows a fragmentary side view of the ultrasonic driving device in Fig. 7;
Fig. 9 shows a side sectional view of an ultrasonic driving device of yet another embodiment of the present invention; and
Fig. 10 shows a side view of a concrete composition of the ultrasonic driving device in Fig. 2.

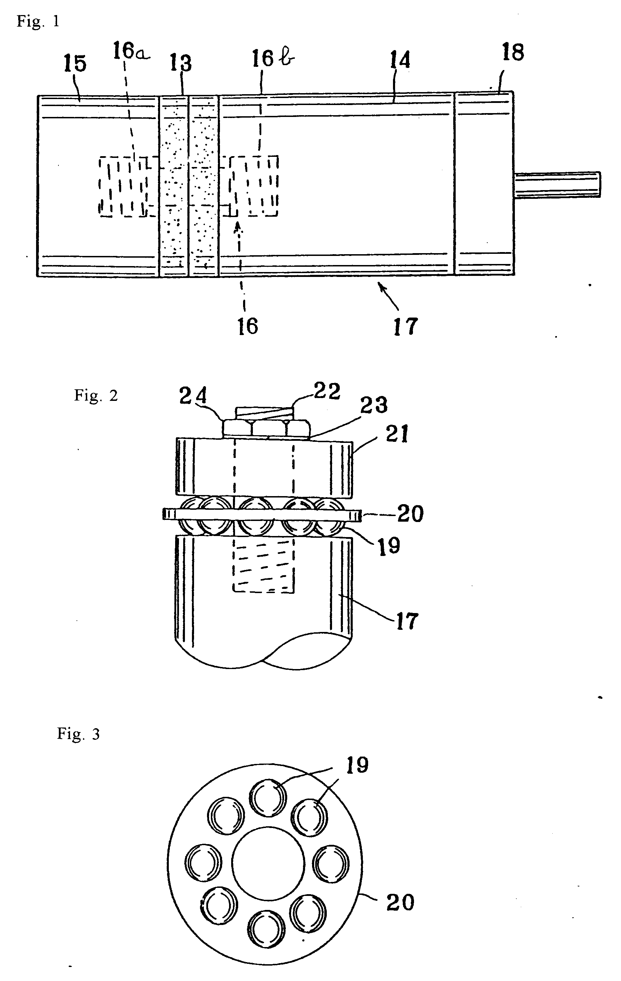

As shown in Fig. 1, in an ultrasonic driving device provided by the present applicant, see U.S. Patent Application Serial No. 164,058, ring-type piezoelectric vibrators 13 of piezoelectric ceramics are put between a short metal block 15 and a long metal block 14 and male screws 16a and 16b at respective ends of a bolt 16 are engaged with female screws in the metal blocks 14 and 15, whereby a stator 17 is constituted.

A rotary member 18 is strongly contacted with the end of the stator 17 by a spring.

In the above ultrasonic driving device, when alternating current voltage is supplied to the piezoelectric vibrators 13, a vibration towards the thickness arises in the piezoelectric vibrators 13 and presses the metal blocks 14 and 15. The pressure of the metal blocks 14 and 15 is influenced by the screws 16a and 16b of the bolt 16, whereby a twist vibration arises in the metal blocks 14 and 15. When the resonance frequency of the twist vibration is coincident with that of the vibration towards the thickness of piezoelectric vibrators 13, a progressive wave (ellipse vibration) arises on the ends and side portion of the stator 17. Therefore, when the rotary member 18 is contacted with the end of the stator 17, the rotary member 18 is smoothly rotated.

In the above ultrasonic driving device, however, the rotary member 18 is strongly pressed to the stator 17 by the spring for transmitting the ellipse vibration generated on the end of the stator 17 to the rotary member 18. Therefore, the contact faces between the end of the stator 17 and the rotary member 18 wear against each other. Thus, a lining material is put between the end of the stator 17 and the rotary member 18 for decreasing the wear between the end of the stator 17 and the rotary member 18. However, even so, the lining material is worn out, noise is generated at the contact between the end of the stator 17 and the rotary member 18 and the life of the ultrasonic driving device is short.

Referring to Figs. 2 and 3, a plurality of balls 19 are rotatably supported in a rotary member 20 and the balls are contacted with the end of the stator 17. One end of a bolt 22 is engaged with a screw at the end of the stator 17 and the other end of the bolt 22 is passed through centre holes in the rotary member 20, a pressure member 21 and a spring washer 23 and, then, a nut 24 is engaged with the screw at the other end of the bolt 22. Therefore, the balls 19 are pressed against the end of the stator 17 by the pressure member 21.

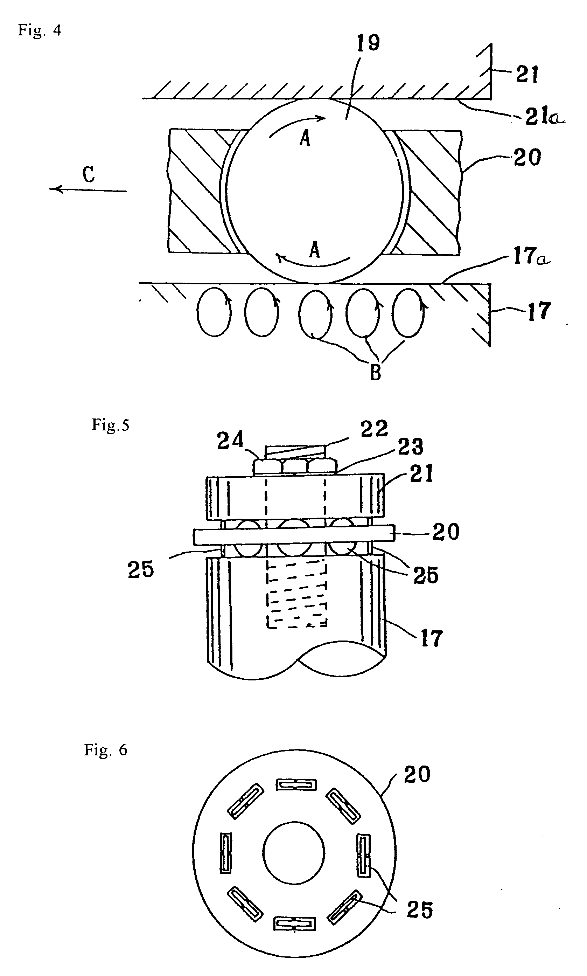

Explaining the motion of the ultrasonic driving device according to the present invention, in Fig. 4, when the progressive wave is generated on the end of the stator 17 as shown by the arrows B, the balls 19 are rotated as shown by the arrows A. When the balls 19 are so rotated, friction arises at the contact portions between the balls 19 and a surface 21a of the pressure member 21 and thus the balls 19 roll on the surface 21a of the pressure member 21. The rotary member 20 is rotated towards the arrow C according to the rotation of the balls 19.

Therefore, when teeth of a gear are formed on the side of the rotary member 20 and are engaged with another gear, the rotary force of the rotary member 20 is transmitted through the other gear to another machine, so that the ultrasonic driving device according to the present invention can be used instead of a known electric motor.

When lubricating oil is supplied to the circumference of the balls 19, the lubricating oil influences the rotation of the balls 19 for the good, because the balls 19 still roll on the surface 21a of the pressure member 21 with point contact, but glide on the end of the stator 17. Wear of the balls 19, the end of the stator 17 and the pressure member 21 is decreased. Therefore, the life of the ultrasonic driving device according to the present invention becomes long.

Referring to Figs. 5 and 6, there is shown a stator 17, a rotary member 20, a pressure member 21, a bolt 22, a washer 23 and a nut 24. These components are the same as those in Fig. 2. However, a plurality of disks 25 or rolls are rotatably supported with the rotary member 20 in a circle instead of the balls 19.

The ultrasonic driving device of this embodiment is driven the same as the above embodiment and has the same effect.

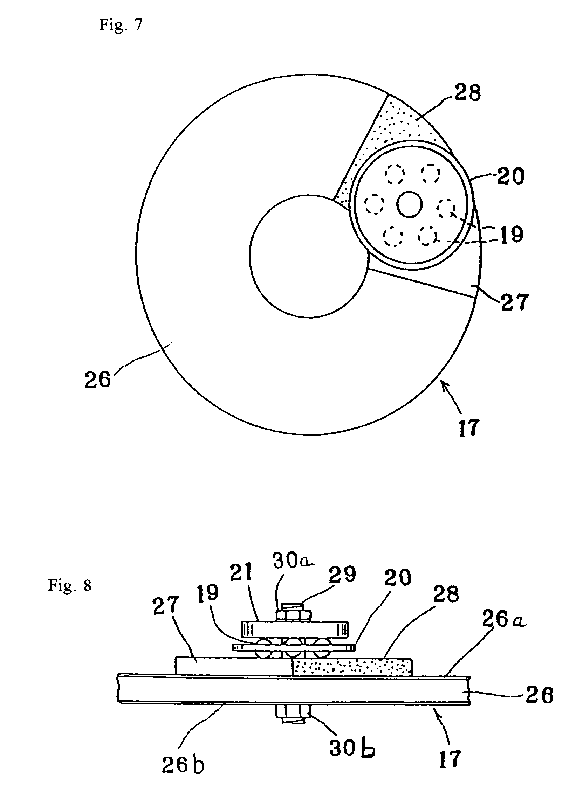

Referring to Figs. 7 and 8, electrodes 26a and 26b are formed on the ends of a ring-type ceramic piezoelectric vibrator 26. A member 27 for transmitting vibration and a member 28 for not transmitting vibration are closely attached with the same thickness on the electrode 26a of the piezoelectric vibrator 26. A bolt 29 is passed through holes at the portion between the members 27 and 28, the piezoelectric vibrator 26 and the electrodes 26a and 26b and holes in a rotary member 20 supporting balls 19 and a pressure member 21. Screws at the ends of the bolt 29 are engaged with nuts 30a and 30b and these elements are fixed.

The ultrasonic driving device having this ring-type piezoelectric vibrator 26 is provided by the present applicant (Japanese Patent Application 48515/1987). When alternating current voltage is applied to the electrodes 26a and 26b in the ultrasonic driving device, a progressive wave is generated from its circumferential edge to its central edge on both sides of the piezoelectric vibrator 26. Therefore, the balls 19 are rotated according to the progressive wave transmitted through the member 27 and thus the rotary member 20 is rotated with the balls 19.

In this embodiment, rolls and disks can be used instead of the balls.

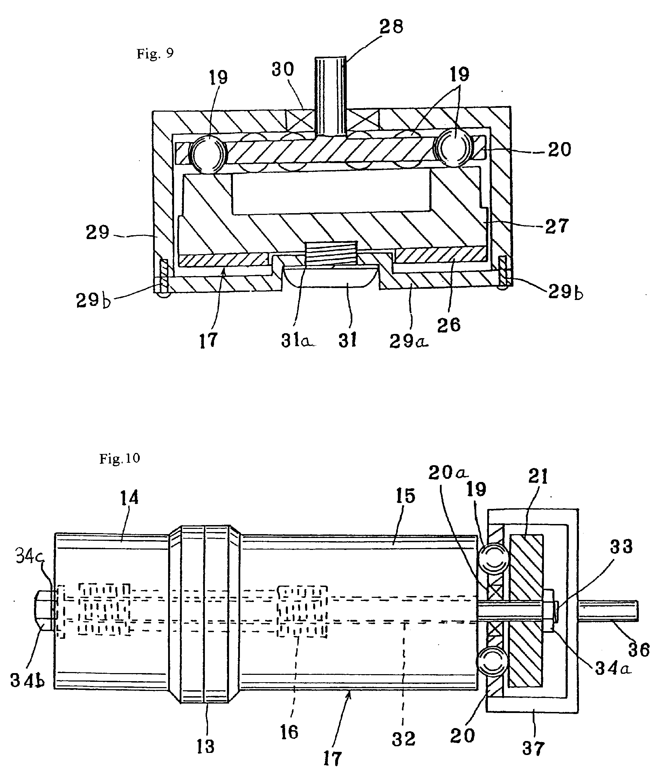

Referring to Fig. 9, in an ultrasonic driving device of another embodiment according to the present invention, a resilient member 27 and a piezoelectric vibrator 26 are provided. A plurality of balls 19 supported with a rotary member 20 are contacted with the resilient member 27. A rotary shaft 28 of the rotary member 20 is protruded beyond a bearing 30 of a case 29. A screw 31 is engaged with a screw in the resilient member 27 through holes in a bottom plate 29a and a washer 31a, and the bottom plate 29a is fixed with the case 29 by screws 29b. Therefore, the balls 19 are strongly contacted with the inside of the case 29 and the surface of the resilient member 27 by the rotation of the screw 31.

In this embodiment, the balls 19 are rotated by the progressive wave and the rotary member 20 is rotated so that a rotary force is obtained from the rotary shaft 28, and again rolls and disks can be used instead of the balls.

Referring to Fig. 10, in an ultrasonic driving device of yet another embodiment according to the present invention, a stator 17 comprises a short metal block 14, a long metal block 15 and a bolt 16 and is the same as the stator 17 in Fig. 1. A hole 32 is formed through the metal blocks 14 and 15 and the bolt 16, and a bolt 33 is passed through the hole 32. One end of the bolt 33 is engaged with a nut 34b through a spring washer 34c and the other end of the bolt 33 is passed through a bearing 20a supported with a rotary member 20 and a hole in a pressure member 21, and is engaged with a nut 34a. Balls 19 rotatably supported with the rotary member 20 are pressed between the end of the stator 17 and the pressure member 21. Both ends of an arm 37 having a rotary shaft 36 are fixed to the sides of the rotary member 20.

In this ultrasonic driving device, when the balls 19 are rotated owing to the progressive wave generated on the end of the stator 17, the rotary member 20 is rotated and the rotary shaft 36 is rotated and, consequently, this ultrasonic driving device can be used instead of a known electric motor.

## Claims

1. An ultrasonic driving device comprising:
a stator (17) including piezoelectric vibrator means (13; 26), a plurality of balls (19), discs (25) or rolls held in contact with the stator (17) by a pressure member (21; 29) acted upon by pressure means (22-24; 29-30b; 29a-31; 33-34c), and rotary means (20) rotatably attached to the plurality of balls (19), discs (25) or rolls, whereby driving the piezoelectric vibrator means (13; 26) causes the stator (17) to generate a progressive wave which is transmitted through the plurality of balls (19), discs (25) or rolls to drive the rotary means (20);
characterised in that the plurality of balls (19), discs (25) or rolls extend through the rotary means (20) into contact with the pressure member (21; 29) and roll along the pressure member (21; 29) when the rotary means (20) is driven by the progressive wave.

2. An ultrasonic driving device according to claim 1, characterised in that lubricating oil is applied to the circumference of the balls, discs or rolls.

3. An ultrasonic driving device according to claim 1 or claim 2, characterised in that the stator comprises a ceramic piezoelectric vibrator or vibrators (13), two metal blocks (14, 15) and a bolt (16).

4. An ultrasonic driving device according to claim 3, characterised in that the pressure means is a bolt (22) having one end engaged with the stator by screw means and the other end engaged by a nut (24).

5. An ultrasonic driving device according to claim 3, characterised in that the pressure means is a bolt (33) passing through holes in the bolt of the stator, the rotary means and the pressure member, screws at both ends of the bolt being engaged by respective nuts (34a, 34b), and the rotary means (20) being fixed by an arm (37) to a rotary shaft (36).

6. An ultrasonic driving device according to claim 1 or claim 2, characterised in that the stator comprises a ring-type ceramic piezoelectric vibrator (26) and electrodes (26a, 26b) on both of its sides.

7. An ultrasonic driving device according to claim 6, characterised in that the stator includes a vibration-transmitting material (27) and a vibration-isolating material (28) closely attached on the electrode (26a) on one side of the piezoelectric vibrator, with the balls, discs or rolls contacting the vibration-transmitting material and the vibration-isolating material, and a bolt (29) passing through holes in the stator, the rotary means and the pressure member, screws at both ends of the bolt being engaged by respective nuts (30a, 30b).

8. An ultrasonic driving device according to any one of claims 3 to 7, characterised in that the pressure member is a cylindrical block (21).

9. An ultrasonic driving device according to claim 1 or claim 2, characterised in that the pressure member is a case (29) having a bearing (30) through which protrudes a rotary shaft (28) fixed to the rotary means (20), the stator comprises a ring-type ceramic piezoelectric vibrator (26) and a resilient member (27), with the plurality of balls, discs or rolls contacting the resilient member, and the pressure means is a screw (31) engaged with a bottom plate (29a) of the case for pressing the resilient member (27).

## Patentansprüche

1. Ultraschall-Antriebsvorrichtung, die aufweist: einen Stator (17) mit piezoelektrischen Schwingermitteln (13; 26), eine Vielzahl von Kugeln (19), Scheiben (25) oder Rollen, die durch ein durch Druckmittel (22 bis 24; 29 bis 30b; 29a bis 31; 33 bis 34c) betätigtes Druckteil (21; 29) in Kontakt mit dem Stator (17) gehalten werden, und ein Rotormittel (20), das drehbar an der Vielzahl von Kugeln (19), Scheiben (25) oder Rollen angebracht ist, wobei Antreiben der piezoelektrischen Schwingermittel (13; 26) bewirkt, daß der Stator (17) eine fortschreitende Welle erzeugt, die durch die Vielzahl von Kugeln (19), Scheiben (25) oder Rollen übertragen wird, um das Rotormittel (20) anzutreiben;
dadurch gekennzeichnet, daß die Vielzahl von Kugeln (19), Scheiben (25) oder Rollen sich durch das Rotormittel (20) hindurch in Kontakt mit dem Druckteil (21; 29) erstreckt und entlang des Druckteils (21; 29) rollt, wenn das Rotormittel (20) durch die fortschreitende Welle angetrieben ist.

2. Ultraschall-Antriebsvorrichtung gemäß Anspruch 1, dadurch gekennzeichnet, daß Schmieröl auf den Umfang der Kugeln, Scheiben oder Rollen aufgebracht ist.

3. Ultraschall-Antriebsvorrichtung gemäß Anspruch 1 oder Anspruch 2, dadurch gekennzeichnet, daß der Stator einen keramischen piezoelektrischen Schwinger oder keramische piezoelektrische Schwinger (13), zwei Metallblöcke (14, 15) und einen Bolzen (16) aufweist.

4. Ultraschall-Antriebsvorrichtung gemäß Anspruch 3, dadurch gekennzeichnet, daß das Druckmittel ein Bolzen (22) ist, dessen eines Ende mit dem Stator durch Schraubenmittel verbunden ist und dessen anderes Ende durch eine Mutter (24) befestigt ist.

5. Ultraschall-Antriebsvorrichtung gemäß Anspruch 3, dadurch gekennzeichnet, daß das Druckmittel ein Bolzen (33) ist, der durch Löcher in dem Bolzen des Stators, dem Rotormittel und dem Druckteil führt, wobei Schrauben an beiden Enden des Bolzens durch Muttern (34a, 34b) befestigt sind, und das Rotormittel (20) durch einen Arm (37) an einem Rotorschaft (36) befestigt ist.

6. Ultraschall-Antriebsvorrichtung gemäß Anspruch 1 oder Anspruch 2, dadurch gekennzeichnet, daß der Stator einen ringartigen keramischen piezoelektrischen Schwinger (26) und Elektroden (26a, 26b) auf seinen beiden Seiten aufweist.

7. Ultraschall-Antriebsvorrichtung gemäß Anspruch 6, dadurch gekennzeichnet, daß der Stator schwingungsübertragendes Material (27) und ein schwingungsisolierendes Material (28) aufweist, die eng anliegend auf der Elektrode (26a) auf einer Seite des piezoelektrischen Schwingers befestigt sind, wobei die Kugeln, Scheiben oder Rollen in Kontakt mit dem schwingungsübertragenden Material und dem schwingungsisolierenden Material sind, und einen Bolzen (29), der durch die Löcher in dem Stator, dem Rotormittel und dem Druckteil führt, wobei Schrauben an beiden Enden des Bolzens durch Muttern (30a, 30b) befestigt sind.

8. Ultraschall-Antriebsvorrichtung gemäß einem der Ansprüche 3 bis 7, dadurch gekennzeichnet, daß das Druckteil ein zylindrischer Block (21) ist.

9. Ultraschall-Antriebsvorrichtung gemäß Anspruch 1 oder Anspruch 2, dadurch gekennzeichnet, daß das Druckteil ein Kasten (29) ist, mit einem Lager (30), durch das ein an dem Rotormittel (20) befestigter Rotorschaft (28) verläuft, wobei der Stator einen ringartigen keramischen piezoelektrischen Schwinger (26) und ein elastisches Teil (27) aufweist, die Vielzahl von Kugeln, Scheiben oder Rollen in Kontakt mit dem elastischen Teil ist und das Druckmittel eine Schraube (31) ist, die mit einer Bodenplatte (29a) des Kastens zum Pressen des elastischen Teils (27) in Eingriff ist.

## Revendications

1. Dispositif d'entraînement ultrasonique comportant:
un stator (17) comportant des moyens (13; 26) formant vibrateur piézo-électrique, une pluralité de billes (19), de disques (25) ou de rouleaux maintenus en contact avec le stator (17) par un élément de pression (21; 29) sur lequel agissent des moyens de pression (22-24; 29-30b; 29a-31; 33-34c), et des moyens rotatifs (20), attachés, avec liberté de rotation, à la pluralité de billes (19), de disques (25) ou de rouleaux, ce par quoi le fait d'entraîner les moyens (13; 26) formant vibrateur piézo-électrique font que le stator (17) génère une onde progressive qui est transmise, par l'intermédiaire de la pluralité de billes (19), de disques (25) ou de rouleaux, pour entraîner les moyens rotatifs (20);
caractérisé par le fait que la pluralité de billes (19), de disques (25) ou de rouleaux s'étendent à travers les moyens rotatifs (20) pour venir en contact avec l'élément de pression (21; 29) et rouler le long de l'élément de pression (21; 29) lorsque les moyens rotatifs (20) sont entraînés par l'onde progressive.

2. Dispositif d'entraînement ultrasonique selon la revendication 1, caractérisé par le fait que l'on applique de l'huile de lubrification sur la circonférence des billes, des disques ou des rouleaux.

3. Dispositif d'entraînement ultrasonique selon la revendication 1 ou la revendication 2, caractérisé par le fait que le stator comporte un vibrateur ou des vibrateurs piézo-électriques céramiques (13), deux blocs de métal (14, 15) et une tige filetée (16).

4. Dispositif d'entraînement ultrasonique selon la revendication 3, caractérisé par le fait que les moyens de pression sont une tige filetée (22) dont l'une des extrémités est vissée dans le stator au moyen d'un filetage et dont l'autre extrémité est vissée dans un écrou (24).

5. Dispositif d'entraînement ultrasonique selon la revendication 3, caractérisé par le fait que les moyens de pression sont une tige filetée (33) passant dans des trous prévus dans la tige filetée du stator, dans les moyens rotatifs et dans l'élément de pression, des filetages aux deux extrémités de la tige filetée se vissant dans des écrous respectifs (34a, 34b) et les moyens rotatifs (20) étant fixés par un étrier (37) à un arbre rotatif (36).

6. Dispositif d'entraînement ultrasonique selon la revendication 1 ou la revendication 2, caractérisé par le fait que le stator comporte un vibrateur piézo-électrique céramique (26) de type annulaire et des électrodes (26a, 26b) sur l'une et l'autre de ses faces.

7. Dispositif d'entraînement ultrasonique selon la revendication 6, caractérisé par le fait que le stator comporte un matériau (27) transmettant les vibrations et un matériau (28) isolant pour les vibrations étroitement attachés sur l'électrode (26) qui se trouve sur l'une des faces du vibrateur piézo-électrique, les billes, disques ou rouleaux venant en contact avec le matériau transmettant les vibrations et avec le matériau isolant pour les vibrations et une tige filetée (29) passant à travers les trous prévus dans le stator, dans les moyens rotatifs et dans l'élément de pression, les filetages qui se trouvent aux deux extrémités de la tige filetée se vissant dans des écrous respectifs (30a, 30b).

8. Dispositif d'entraînement ultrasonique selon l'une quelconque des revendications 3 à 7, caractérisé par le fait que l'élément de pression est un bloc cylindrique (21).

9. Dispositif d'entraînement ultrasonique selon la revendication 1 ou la revendication 2, caractérisé par le fait que l'élément de pression est une boîte (29) comportant un palier (30) à travers lequel dépasse un arbre rotatif (28) fixé aux moyens rotatifs (20), que le stator comporte un vibrateur piézo-électrique céramique (26) de type annulaire et un élément élastique (27), la pluralité de billes, disques ou rouleaux venant au contact de l'élément annulaire et que les moyens de pression sont une vis (31) vissée dans la plaque de fond (29) de la boîte pour presser l'élément élastique (27).
